(19) Europäisches Patentamt
European Patent Office
Office européen des brevets

(11) Veröffentlichungsnummer: **0 019 212**
**A1**

(12) # EUROPÄISCHE PATENTANMELDUNG

(21) Anmeldenummer: 80102519.8

(22) Anmeldetag: 08.05.80

(51) Int. Cl.[3]: C 08 L 69/00

(30) Priorität: 21.05.79 DE 2920450

(43) Veröffentlichungstag der Anmeldung: 26.11.80 Patentblatt 80/24

(84) Benannte Vertragsstaaten: BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Idel, Karsten, Dr.
Scheiblerstrasse 81
D-4150 Krefeld(DE)

(72) Erfinder: Cohnen, Wolfgang, Dr.
Heymannstrasse 36
D-5090 Leverkusen(DE)

(72) Erfinder: Freitag, Dieter, Dr.
Hasenheide 10
D-4150 Krefeld-Traar(DE)

(72) Erfinder: Schlak, Ottfried, Dr.
Carl-Duisberg-Strasse 331
D-5090 Leverkusen(DE)

(54) **Verwendung von organischen Siliciumverbindungen zur Stabilisierung und Aufhellung von phosphitfreien und borsäureesterfreien Polycarbonaten.**

(57) Gegenstand der vorliegenden Erfindung ist die Verwendung von organischen Siliciumverbindungen mit drei oder vier Organo-oxy-Resten am Si-Atom in Mengen von 0,01 bis 1 Gew.-%, vorzugsweise in Mengen von 0,01 bis 0,5 Gew.-%, bezogen jeweils auf Gesamtgewicht an organischen Siliciumverbindungen und Polycarbonat, zur Stabilisierung und Aufhellung von phosophitfreien und borsäureesterfreien thermoplastischen, aromatischen Polycarbonaten, insbesondere von solchen, die nach den bekannten Lösungsverfahren hergestellt sind und ganz besonders von solchen, die außerdem frei von Pigmenten sind.

EP 0 019 212 A1

Croydon Printing Company Ltd.

BAYER AKTIENGESELLSCHAFT
Zentralbereich
Patente, Marken und Lizenzen

5090 Leverkusen, Bayerwerk
PS-ki-Kü

17. Mai 1979

# Verwendung von organischen Siliciumverbindungen zur Stabilisierung und Aufhellung von phosphitfreien und borsäureesterfreien Polycarbonaten

Gegenstand der vorliegenden Erfindung ist die Verwendung von organischen Siliciumverbindungen mit drei oder vier Organo-oxy-Resten am Si-Atom in Mengen von 0,01 bis 1 Gew.-%, vorzugsweise in Mengen von 0,01 bis 0,5 Gew.-%, bezogen jeweils auf Gesamtgewicht an organischen Siliciumverbindungen und Polycarbonat, zur Stabilisierung und Aufhellung von phosphitfreien und borsäureesterfreien thermoplastischen, aromatischen Polycarbonaten, insbesondere von solchen, die nach den bekannten Lösungsverfahren hergestellt sind, und ganz besonders von solchen, die außerdem frei von Pigmenten sind.

Gemäß DE-OS 27 26 662 lassen sich Polycarbonate mit cyclischen Diphosphiten gegen thermische Oxidation stabilisieren. Als Costabilisatoren werden Epoxide oder Silane empfohlen, wobei jedoch bei der Verwendung von Silanen als Costabilisatoren bei der Hitzealterung gemäß Tabelle II und bei der Behandlung im Dampfautoklaven gemäß Tabelle III der DE-OS 27 26 662 das Silan keine costabilisierende Wirkung besitzt, sondern vielmehr eine Verschlechterung verursacht (vergleiche jeweils Proben C und D). Lediglich die thermische Beständigkeit gegen Verfärbung bei Verformung unter extremen Temperaturen gemäß Tabelle I der DOS 27 26 662 wird durch den Zusatz von Silan verbessert.

Demgegenüber bewirkt das Epoxid als Costabilisator bei dem Test gemäß Tabelle I der DE-OS 27 26 662 eine Verschlechterung und bei den Tests gemäß Tabellen II und III der DE-OS 27 26 662 eine zum Teil erhebliche Verbesserung.

Gemäß DE-OS 26 59 756 verbessern Polysiloxanflüssigkeiten die stabilisierende Wirkung von Phosphiten und gegebenenfalls Epoxiverbindungen in Polycarbonaten (vgl. die Beispiele dieser DE-OS).

Gemäß DE-OS 27 41 064 verbessern Silanole die stabilisierende Wirkung von Phosphiten in pigmentierten Polycarbonaten (vgl. die Beispiele dieser DE-OS). Epoxiverbindungen können zusätzlich oder anstelle der Phosphite verwendet werden.

Gemäß DE-OS 25 10 463 (Le A 16 231) finden Mischungen aus neutralen Estern der phosphorigen Säure und Oxetanverbindungen zur Stabilisierung von Polycarbonaten Verwendung.

Als Oxetanverbindungen sind auch Ester der Kieselsäure mit oxetanhaltigen Alkoholen geeignet (Seite 4 der DE-OS).

Gemäß der europäischen Patentanmeldung 78 101 260.4 (Le A 18 380-EP) eignen sich oxetangruppenhaltige Borsäureester gegebenenfalls in Kombination mit borfreien Oxetanverbindungen oder Mischungen aus oxetangruppenfreien Borsäureestern mit borfreien Oxetanverbindungen zum Stabilisieren von phosphitfreien Polycarbonaten. Als borfreie Oxetanverbindungen können Kieselsäureester verwendet werden.

Demgegenüber war es überraschend, daß gemäß vorliegender Erfindung organische Siliciumverbindungen phosphitfreie und borsäureesterfreie Polycarbonate zu stabilisieren und aufzuhellen vermögen, insbesondere solche, die frei von Pigmenten sind.

Gemäß GB-PS 1 141 869 sind Silane als Umesterungskatalysatoren für die Polycarbonatherstellung nach dem Schmelzumesterungsverfahren geeignet, welche zugleich stabilisierend wirken und somit die mit manchen Umesterungskatalysatoren verursachten Verfärbungen und Trübungen des hergestellten Polycarbonats nicht bewirken.

Die eingesetzten Silane enthalten maximal einen Alkoxysilan-Rest. Gemäß DE-OS 1 770 329 und US-PS 3 625 920 können derartige Silane auch zusammen mit Boraten als Umesterungskatalysatoren mit dem gleichen Ziel eingesetzt werden.

Aus diesen Literaturstellen läßt sich jedoch nicht ableiten, daß der Zusatz von organischen Siliciumverbindungen zu Polycarbonaten, insbesondere zu solchen, die nach den Lösungsverfahren hergestellt sind, außer einer stabilisierenden Wirkung gegen Abbau bei thermischer Belastung zusätzlich eine aufhellende Wirkung besitzen.

Im US-Patent 4 138 379 werden Silane gegebenenfalls in Kombination mit Phosphiten und/oder Epoxiden als Additive zur Erhöhung des Schmelzflusses und als Stabilisatoren gegen einen Wärme-oxidativen Abbau beansprucht. In sämtlichen Beispielen dieser Anmeldung wird jedoch zusätzlich ein Gemisch aus 1 Teil Diphenyl-octylphosphit und 2 Teilen 3,4-Epoxycyclohexylmethyl-3,4-epoxycyclohexancarboxylat zugefügt, so daß nicht gezeigt wird, ob die Siliciumverbindungen alleine und ohne die z.B. für das Hydrolyseverhalten des Polycarbonats wenig vorteilhaften Phosphite eine ausreichend stabilisierende Wirkung besitzen. Darüber hinaus wird nur ein positiver Effekt nach der Verarbeitung und nicht nach Langzeittemperaturalterung beschrieben.

Organische Siliciumverbindungen im Sinne der vorliegenden Erfindung sind solche, die drei oder vier Organo-oxy-Reste am Si-Atom gebunden enthalten.

Geeignete Siliciumverbindungen sind insbesondere solche der Formel (1)

$$(R_1)_a\text{-Si-}(OR_2)_b \qquad (1)$$

worin a + b = 4, b 3 oder 4 ist, $R_1$ H oder $C_1$-$C_{18}$-Alkyl, $C_2$-$C_{18}$-Alkenyl, $C_6$-$C_{24}$ Aryl, $C_7$-$C_{24}$-Alkylaryl oder $C_7$-$C_{24}$-Aralkyl und $R_2$ $C_1$-$C_{18}$-Alkyl, $C_2$-$C_{18}$-Alkenyl, $C_5$-$C_{10}$-Cycloalkyl oder $C_7$-$C_{24}$-Aralkyl sind.



BAD ORIGINAL

Die Alkyl- bzw. Alkenyl-Reste $R_1$ und $R_2$ können linear oder verzweigt sein.

Die C-Reste $R_1$ und $R_2$ können beliebige, nicht basische, bei der thermoplastischen Verarbeitung der Polycarbonate thermisch stabile und inerte Substituenten enthalten wie beispielsweise Halogenatome wie Chlor oder Brom, $C_1$-$C_{18}$-Alkoxigruppen, $C_6$-$C_{24}$-Aryloxigruppen, heterocyclische Reste mit Sauerstoff, Schwefel und/oder nicht basischen Stickstoffatomen, Ketogruppen, Estergruppen, Nitrilgruppen, Ethergruppen und/oder Thioethergruppen.

Bevorzugte Reste $R_1$ sind z.B.
Methyl
Ethyl
Vinyl
Propyl
3-Chlorpropyl
3-Methacryloxypropyl
Butyl
Pentyl
Hexyl und
Cyclohexyl.

Bevorzugte Reste $R_2$ sind z.B
Butyl
Pentyl
Hexyl
Octyl
Stearyl
Decyl
Cyclohexyl
Methyl-cyclohexyl

(3-Methyloxetanyl-3)-methyl
(3-Ethyloxetanyl-3)-methyl
(3-Amyloxetanyl-3)-methyl
2-Methoxy-ethyl
3-Methoxy-propyl
3-Ethoxy-propyl
3-(Thiomethyl)-propyl
(5-Ethyl-1,3-dioxanyl-5-)-methyl und
2,3-Epoxy-propyl.

Im Vergleich zum unstabilisierten Polycarbonat zeigen die erfindungsgemäß stabilisierten aromatischen Polycarbonate eine deutlich höhere Lichttransparenz und Farbkonstanz sowohl direkt nach der thermoplastischen Verarbeitung als auch nach einer mehrere tausend Stunden dauernden Wärmealterung. Insbesondere nach der Wärmealterung zeigen sich die erfindungsgemäß mit Siliciumverbindungen der Formel 1 stabilisierten Polycarbonate solchen mit Triorganophosphiten aufgrund der geringeren Farbveränderung überlegen.

Darüber hinaus beeinflussen die Siliciumverbindungen der Formel 1 in keiner Weise die Hydrolysestabilität der aromatischen Polycarbonate, während Triorganophosphite die Hydrolysestabilität mindern können.

Zur Darstellung der Siliciumverbindungen der Formel 1 bieten sich hauptsächlich zwei Verfahren an:

1. Die Umsetzung von Siliciumhalogeniden mit Alkoholen nach dem Schema:

$$(R_1)_a\text{-Si-Cl}_b + b\ R_2OH \longrightarrow b\ HCl + (R_1)_a\text{-Si-}(OR_2)_b$$

2. Die Umesterung von Kieselsäureestern niedriger Alkohole mit den entsprechenden Alkoholen unter Abdestillation der frei werdenden niedrigen Alkohole (Ethanol, Methanol) nach dem Schema:

$$(R_1)_a\text{-Si-}(OR')_b + b\ R_2OH \longrightarrow b\ R'OH + (R_1)_a\text{-Si-}(OR_2)_b$$

$R' = CH_3, C_2H_5$

Die Darstellung nach diesen Methoden ist z.B. beschrieben bei: D. Ridge u. M. Todd, J. Chem. Soc. 1949, S. 2637 - 2640 oder V. Bazant, V. Chvalovsky', J. Rathousky': Organosilicon Compounds, Bd. 1, S. 51 - 61, Academic Press, New York 1965.

Als Beispiel seien folgende Verbindungen genannt:

Tetrabutoxysilan
Tetrapentoxysilan
Tetrahexoxysilan
Tetraoctoxysilan
Tetradecoxysilan
Tetrastearoxysilan
Tetra-cyclohexoxysilan
Tetrakis-(methyl-cyclohexoxy)-silan
Methyl-tributoxysilan
Methyl-trihexoxysilan
Methyl-trioctoxysilan
Methyl-tridecoxysilan
Methyl-tristearoxysilan
Methyl-tri-cyclohexoxysilan
Methyl-tris-(methyl-cyclohexoxy)-silan
Vinyl-tributoxysilan
Vinyl-trihexoxysilan

Vinyl-trioctoxysilan
Vinyl-trihexoxysilan
Vinyl-tristearoxysilan
Vinyl-tricyclohexoxysilan
Vinyl-tris-(methyl-cyclohexoxy)-silan
Tributoxysilan
Trihexoxysilan
Trioctoxysilan
Tridecoxysilan
Tetrakis-(2-ethoxy-ethoxy)-silan
Methyl-tris-(2-ethoxy-ethoxy)-silan
Vinyl-tris-(2-ethoxy-ethoxy)-silan
Vinyl-tris-(2-methoxy-ethoxy)-silan
Methyl-tris-(2-methoxy-ethoxy)-silan
3-Chlorpropyl-triethoxysilan
3-Chlorpropyl-tributoxysilan
3-Chlorpropyl-trihexoxysilan
3-Chlorpropyl-trioctoxysilan
3-Glycidylpropoxy-triethoxysilan
3-Glycidylpropoxy-tributoxysilan
3-Glycidylpropoxy-trihexoxysilan
3-Glycidylpropoxy-trioctoxysilan
Iso-butyl-tributoxysilan
Iso-butyl-trioctoxysilan
Tetrakis-(2-methoxyethoxy)-silan
3-Methacryloxypropyl-trimethoxysilan
Tetrakis-[(3-methyloxetanyl-3)-methoxy]-silan
Tetrakis-[(3-ethyloxetanyl-3)-methoxy]-silan
Tetrakis-[(3-amyloxetanyl-3)-methoxy]-silan
Methyl-tris-[(3-methyloxetanyl-3)-methoxy]-silan
Tetrakis-[(5-ethyl-1,3-dioxanyl-5)methoxy]-silan
Methyl-tris-[(5-ethyl-1,3-dioxanyl-5)-methoxy]-silan

Tetrakis-(2,3-epoxy-propoxy)-silan und
Methyl-tris-(2,3-epoxy-propoxy)-silan

Die Einarbeitung der organischen Siliciumverbindungen der Formel 1 in die aromatischen Polycarbonate kann erfolgen, indem die Siliciumverbindungen entweder in reiner Form dem geschmolzenen Polycarbonat oder als Lösung in einem niedrigsiedenden Lösungsmittel wie beispielsweise Methylenchlorid der Polycarbonatlösung zudosiert werden. Auch durch Tränkung des gepulverten oder ganulierten Polycarbonats mit den Pulver-förmigen oder flüssigen Verbindungen der Formel 1, gegebenenfalls mit einer Lösung der Verbindungen der Formel 1 in einem Lösungsmittel wie Methylenchlorid, in einer geeigneten Mischapparatur durch sogenanntes Auftrudeln und anschließender thermoplastischer Verarbeitung nach bekannten Techniken lassen sich die erfindungsgemäßen stabilisierten, aromatischen Polycarbonate herstellen. Vor der Einarbeitung der organischen Siliciumverbindungen sollen die zu stabilisierenden Polycarbonate einen Feuchtigkeitsgehalt von weniger als 0,01 Gew.-%, bezogen auf Gewicht Polycarbonatharz, haben, um eine Hydrolyse der organischen Siliciumverbindungen auszuschließen.

Die organischen Siliciumverbindungen können allein oder im Gemisch miteinander eingesetzt werden.

Unter aromatischen Polycarbonaten im Sinne dieser Erfindung werden Homopolycarbonate und Copolycarbonate verstanden, denen z.B. ein oder mehrere der folgenden Diphenole zugrundeliegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole

sowie deren kernalkylierte und kernhalogenierte Verbindungen. Diese und weitere geeignete Diphenole sind z.B. in den US-Patentschriften 3 028 365, 2 999 835, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der franz. Patentschrift 1 561 518 und der Monographie "H. Schnell, Chemistry and Physics of Polycarbonates, Intersciene Publishers, New York, 1964", beschrieben.

Bevorzugte Diphenole sind z.B.:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol

2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
$\alpha,\alpha'$-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, so z.B. nach dem Schmelzumesterungsverfahren aus Bisphenol und Diphenylcarbonat und nach dem bekannten Lösungsverfahren aus Bisphenolen und Phosgen, wie es in der obengenannten Literatur beschrieben ist. Als Lösungsverfahren sind sowohl das in homogener Phase, das sogenannte Pyridinverfahren, als auch das in heterogener Phase, das sogenannte Zweiphasengrenzflächenverfahren geeignet. Polycarbonate, die nach den bekannten Lösungsverfahren, insbesondere nach dem Zweiphasengrenzflächenverfahren hergestellt worden sind, sind zur Stabilisierung gemäß vorliegender Erfindung besonders geeignet.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, z.B. solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 25 00 092 (Le A 16 142) beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan. 2,2-Bis-[4,4-bis-(4-hydroxyphenyl)-cyclohexyl]-propan, 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4"-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben, ermittelt durch Messungen der rel. Viskosität in $CH_2Cl_2$ bei 25°C und einer Konzentration von 0,5 Gew.-%.

Im Falle der Polycarbonatmischungen können den hochmolekularen Polycarbonaten mit $\bar{M}_w$ von 10 000 bis 200 000 auch kleine Anteile niedermolekularer Polycarbonate, z.B. mit einem mittleren Polymerisationsgrad von 2 - 20, zugemischt sein.

Wie üblich können den aromatischen Polycarbonaten die üblichen Zusatzstoffe vor, während oder nach dem Herstellungsprozeß zugemischt werden, wobei sich die erfindungsgemäßen organischen Siliciumverbindungen durch hervorragende Verträglichkeit mit anderen Additiven wie z.B. UV-Absorbern oder Flammschutzmitteln auszeichnen.

Als Zusatzstoffe seien beispielsweise erwähnt: Entformungsmittel, Farbstoffe, anorganische Pigmente,

UV-Absorber, Füllstoffe wie Glasfasern, Graphit, Asbest, Metallpulver etc.

Beispiele

Als Basismaterial für die Untersuchungen wurde ein Polycarbonat auf Basis 2,2-Bis-(4-hydroxyphenyl)-propan mit einer Lösungsviskosität von $\eta_{rel}$ = 1,285 (0,5 g Polycarbonat in 100 ml Methylenchlorid bei 25°C) gewählt, das frei von stabilisierenden Additiven war und das nach dem Zweiphasengrenzflächenverfahren aus 2,2-Bis-(4-hydroxyphenyl)-propan und Phosgen in bekannter Weise hergestellt worden war.

In dieses Polycarbonat wurden verschiedene Stabilisatoren eingearbeitet und die auf diese Weise stabilisierten Polycarbonate im Vergleich zu Phosphitstabilisiertem Material bezüglich der Lichtdurchlässigkeit direkt nach Verarbeitung und nach 1500 Stunden Wärmealterung bei 140°C sowie der Hydrolysefestigkeit im Kochtest untersucht. Die Einarbeitung erfolgt durch Auftrudeln des jeweiligen Stabilisators auf das Polycarbonat und nachfolgende thermoplastische Verarbeitung des so beladenen Polycarbonats zum Beispiel im Zweiwellenextruder. Die dabei erhaltenen Granulate wurden in einem Spritzgußautomaten zu Normprüfstäben verarbeitet.

Die Lichtdurchlässigkeit (Lichttransmission) dieser Normprüfstäbe wurde nach DIN 5033 und DIN 4646 bei 420 µm am spritzfrischen Material gemessen. Die gleiche Messung wurde nach 1500 Stunden Wärmealterung bei 140°C wiederholt und die Prüfstäbe farblich abgemustert. Die Wärmealterung wird unter Luftatmosphäre durchgeführt. Beim Hydrolysetest wurden die

Prüfstäbe in bei Atmosphärendruck kochendem Wasser behandelt und nach jeweils 100 Stunden Kochzeit abgemustert.

Folgende Verbindungen wurden in Polycarbonat eingearbeitet und ihre stabilisierende Wirkung überprüft:

I Tris-[(3-ethyloxetanyl-3)-methyl]-phosphit

II 310 Gew.-Teile Triphenylphosphit (1 Mol)/ 426 Gew.-Teile Cyclohexan-1,2-dicarbonsäure-bis-ß-epoxypropylester (1,5 Mol) (Mischung Phosphit/Epoxid)

III Tris-[(3-ethyloxetanyl-3)-methoxy]-methylsilan

IV Tetrakis-[(3-ethyloxetanyl-3)-methoxy]-silan

V Tetraoctoxysilan

VI Tetrabutoxysilan

VII Tetrakis-[(5-ethyl-1,3-dioxanyl-5)-methoxy]-silan

VIII 310 Gew.-Teile Triphenylphosphit (1 Mol)/ 306 Gew.-Teile 3-Hydroxymethyl-3-methyloxetan (3 Mol)

In Tabelle 1 sind die Ergebnisse der Lichttransmissionsmessung von I - VIII direkt nach Verarbeitung und Wärmealterung sowie die farbliche Abmusterung nach Wärmealterung dargestellt.

Die Primäraufhellung der erfindungsgemäßen Siliciumverbindungen liegt in der Größenordnung der mit Phosphiten bzw. deren Mischungen, z.B. mit Epoxiden erhaltenen Werte.

Die Überlegenheit der erfindungsgemäßen Siliciumverbindungen gegenüber Phosphiten und deren Mischungen zeigt sich deutlich durch eine bessere Lichtdurchlässigkeit und Farbe nach der Wärmealterung.

In Tabelle 2 sind die Ergebnisse des Kochversuchs wiedergegeben. Im Vergleich zum unstabilisierten Polycarbonat hat ein erfindungsgemäß stabilisiertes Polycarbonat keine Nachteile in der Hydrolysestabilität, während phosphitstabilisiertes Polycarbonat bereits nach 700 Stunden Kochzeit einen gravierenden Molekulargewichtsabbau und Verlust der mechanischen Eigenschaften zeigt.

Tabelle 1

| Polycarbonat ($\eta$ rel 1,285) + 0,1 Gew.% Stabilisator | Lichttransmission bei 420 nm (spritzfrische Probe) | Lichttransmission nach Wärmealterung 1500 Std. 140°C | Farbe nach Wärmealterung 1500 Std. 140°C |
|---|---|---|---|
| I | 0,850 | 0,490 | bräunlich |
| II | 0,840 | 0,700 | gelblich |
| III | 0,845 | 0,780 | fast farblos |
| IV | 0,855 | 0,795 | fast farblos |
| V | 0,850 | 0,790 | fast farblos |
| VI | 0,855 | 0,795 | fast farblos |
| VII | 0,855 | 0,800 | fast farblos |
| VIII | 0,840 | 0,680 | gelblich |

Tabelle 2

| Kochzeit [Std.] | Polycarbonat ohne Stabilisator | | Polycarbonat mit 0,1 Gew.% Tris-[(3-ethyloxetanyl-3)-methyl]-phosphit | | Polycarbonat mit 0,1 Gew.% Tetrakis- [(5-ethyl-1,3-dioxanyl-5)-methoxy]-silan | |
|---|---|---|---|---|---|---|
| | $\eta_{rel}$ | $a_n$ | $\eta_{rel}$ | $a_n$ | $\eta_{rel}$ | $a_n$ |
| 0-Wert | 1,289 | n.gebr. | 1,289 | n.gebr. | 1,293 | n.gebr. |
| 100 | 1,285 | n.gebr. | 1,259 | 9x n.gebr.<br>1x 90,9 | 1,288 | n.gebr. |
| 200 | 1,284 | n.gebr. | 1,160 | 4x n.gebr.<br>6x 16,7 | 1,285 | n.gebr. |
| 300 | 1,275 | n.gebr. | 1,194 | 4,9 | 1,275 | 9x n.gebr.<br>1x 96,5 |
| 400 | 1,274 | 9x n.gebr.<br>1x 16,6 | 1,171 | 1,8 | 1,276 | n.gebr. |
| 500 | 1,269 | 44,4 | 1,155 | 1,0 | 1,268 | n.gebr. |
| 700 | 1,261 | 3x n.gebr.<br>7x 46,0 | 1,177 | 0,8 | 1,261 | 4x n.gebr.<br>6x 45,5 |
| 1000 | 1,251 | 2x n.gebr.<br>8x 49,7 | - | - | 1,254 | 2x n.gebr.<br>8x 46,6 |
| 1250 | 1,242 | 1x n.gebr.<br>9x 11,1 | - | - | 1,244 | 3x n.gebr.<br>7x 48,6 |
| 1500 | 1,237 | 14,2 | - | - | 1,234 | 36,5 |

$\eta_{rel}$: relative Lösungsviskosität / $a_n$: Schlagzähigkeit (kJ/m$^2$) / n.gebr.: $a_n$ nicht gebrochen

Patentansprüche

1. Verwendung von organischen Siliciumverbindungen mit drei oder vier Organo-oxy-Resten am Si-Atom in Mengen von 0,01 bis 1 Gew.-%, bezogen jeweils auf Gesamtgewicht an organischen Siliciumverbindungen und Polycarbonat, zur Stabilisierung und Aufhellung von phosphitfreien und borsäureesterfreien, thermoplastischen, aromatischen Polycarbonaten.

2. Verwendung von organischen Siliciumverbindungen in Mengen von 0,01 bis 0,5 Gew.-% gemäß Anspruch 1.

3. Verwendung von organischen Siliciumverbindungen der Formel (1)

$$(R_1)_a - Si - (OR_2)_b$$

worin a + b = 4, b 3 oder 4,

$R_1$ H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und $R_2$ $C_1$-$C_{18}$-Alkyl, $C_2$-$C_{18}$-Alkenyl, $C_5$-$C_{10}$-Cycloalkyl oder $C_7$-$C_{24}$-Aralkyl, sind, gemäß den Ansprüchen 1 und 2.

4. Verwendung von organischen Siliciumverbindungen gemäß den Ansprüchen 1 bis 3 zur Stabilisierung und Aufhellung von Polycarbonaten, die nach den bekannten Lösungsverfahren hergestellt sind.

5. Verwendung von organischen Siliciumverbindungen gemäß den Ansprüchen 1 bis 4 zur Stabilisierung und Aufhellung von Polycarbonaten, die frei von Pigmenten sind.

Europäisches Patentamt

# EUROPÄISCHER RECHERCHENBERICHT

Nummer der Anmeldung
EP 80 10 2519

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl.) |
|---|---|---|---|
| D | GB - A - 1 141 869 (INSTYTUT TWORZYW SZTUCZNYCH)<br>* Ansprüche 1-6 *<br>-- | 1-5 | C 08 L 69/00 |
| D | US - A - 4 138 379 (S.W. SCOTT, H.A. VAUGHN)<br>* Anspruch 1; Seite 1, Spalte 2, Zeilen 6-35 *<br>----- | 1-5 | |

RECHERCHIERTE SACHGEBIETE (Int. Cl.)

C 08 L 69/00
C 08 K 5/54

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 29-08-1980 | DECOCKER |